# EUROPÄISCHE PATENTSCHRIFT

(11) **EP 1 106 048 B1**
(45) Veröffentlichungstag und Bekanntmachung des Hinweises auf die Patenterteilung: **24.05.2006**
(21) Anmeldenummer: 00126360.7
(22) Anmeldetag: 02.12.2000
(51) Int. Cl.: A01D 45/02

(54) **Einzugs- und Pflückeinrichtung einer Erntegutbergungsvorrichtung**
Corn gathering and picking device of a crop loading device
Dispositif d'introduction et de cueillage d'un dispositif de chargement de récoltes

(30) Priorität: 09.12.1999 DE 19959281
(43) Veröffentlichungstag der Anmeldung: 13.06.2001
(73) Patentinhaber: Maschinenfabrik Kemper GmbH & Co. KG, 48703 Stadtlohn (DE)
(72) Erfinder: Wolters, Norbert, 48712 Gescher (DE); Wuebbels, Richard, 46414 Rhede (DE)
(74) Vertreter: Holst, Sönke

(56) Entgegenhaltungen:
- DE-A- 19 734 747
- FR-A- 2 599 931
- GB-A- 2 012 154
- US-A- 3 894 382
- US-A- 5 661 964

## Beschreibung

Die Erfindung betrifft eine Einzugs- und Pflückeinrichtung, mit einer Einzugseinrichtung, die zum Erfassen von Teilen, insbesondere Stängeln, von Pflanzen eingerichtet und geeignet ist, Pflanzen einer Pflückeinrichtung zuzuführen, die eingerichtet ist, Teile von den Pflanzen abzutrennen, wobei die Einzugseinrichtung die wirksame Länge des Pflückkanals der Pflückeinrichtung überdeckt.

Ein reihenabhängiger Maispflücker ist beispielsweise aus der US 3 894 382 A oder der DE 30 29 424 A bekannt. Er ist mit mehreren parallelen Einzugskanälen versehen, die etwa horizontal und in Vorwärtsfahrtrichtung verlaufen, und an deren zwei Seitenrändern an umlaufenden Ketten befestigte Mitnehmer die zu erntenden Pflanzenstängel einziehen. Die Pflanzenstängel werden von horizontalen und beidseits der Einzugskanäle angeordneten, gegensinnig rotierenden Pflückwalzen erfasst und eingezogen, wobei die Maiskolben einen zwischen zwei Deckplatten gebildeten Spalt nicht passieren können, so dass sie daran hängen bleiben und mittels einer Schnecke zur weiteren Verarbeitung in einen Mähdrescher abtransportiert werden. Die Pflanzenstängel hingegen werden von den Pflückwalzen vollständig eingezogen und auf dem Feldboden abgelegt. Bei vielen Maispflückern werden die Pflanzenstängel durch ein unterhalb der Pflückwalzen rotierendes Messer zerhackt. Bei diesen bekannten Maispflückern ist als nachteilig anzusehen, dass sie nur Pflanzen erfassen können, die in der Nähe des Einzugskanals stehen. Deshalb muss der Querabstand der Einzugskanäle relativ genau dem Pflanzenreihenabstand entsprechen und das Erntefahrzeug exakt gelenkt werden. Außerdem sind die Ketten relativ verschleißanfällig.

Ein Maispflücker mit mehreren hintereinander angeordneten kleineren Rotoren, die die Pflanzen sukzessive entlang des Pflückspalts fördern, ist in der US 5 916 113 A beschrieben.

In der DE 197 34 747 A ist ein Maisernte-Vorsatzgerät zum Anbau an eine selbstfahrende Erntemaschine beschrieben, das reihenunabhängig mähen und die Maiskolben von den Pflanzen pflücken kann, um sie gesondert vom Rest der Pflanzen zu verarbeiten, beispielsweise auszudreschen. Das Gerät weist zum reihenunabhängigen Erfassen und Abmähen der Pflanzen ein Mähwerk mit einer rotierenden, am Außenumfang mit Aussparungen versehenen Trommel und einem darunter rotierenden Messer auf, wie es von Maisgebissen her bekannt ist. Die Pflanzen werden dann stromab des Mähwerks angebrachten konventionellen Pflückaggregaten zugeführt, wie sie in der DE 30 29 424 A beschrieben sind. Dieses Gerät arbeitet zwar reihenunabhängig, als nachteilig ist aber der relativ hohe mechanische Aufwand und die große Baulänge anzusehen.

Die der Erfindung zugrunde liegende Aufgabe wird darin gesehen, eine reihenunabhängig arbeitende Einzugs- und Pflückeinrichtung bereitzustellen, die sich durch einen einfachen Aufbau und Betriebssicherheit auszeichnet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Wei se weiterentwickeln.

Der vorliegenden Erfindung liegt der Kerngedanke zugrunde, die Einzugseinrichtung nicht nur zum reihenunabhängigen Erfassen der Pflanzen zu verwenden, sondern sie auch für den Transport der Pflanzen durch die Pflückeinrichtung einzusetzen. Die Einzugseinrichtung sorgt also dafür, dass die Pflanzen über die wirksame Länge der Pflückeinrichtung transportiert werden. Die wirksame Länge ist der Teil der Länge der Pflückeinrichtung, in dem die Pflückeinrichtung die Pflanze bearbeitet, d. h. einzieht und die Nutzteile vom Resten der Pflanze trennt. Sie verläuft in der Regel quer zur Richtung, in der die Pflückeinrichtung die Pflanze einzieht.

Die Einzugseinrichtung hält die Pflanze in der Zeit fest, in der sie von der Pflückeinrichtung bearbeitet wird. Im konkreten wird sie zumindest während eines wesentlichen Teils des Pflückvorganges von der Einzugseinrichtung festgehalten, und nicht nur - wie im Stand der Technik, DE 197 34 747 A - während eines Einfädelvorganges, bei dem die Pflanze in den Wirkungsbereich der Pflückeinrichtung verbracht wird. Denkbar ist aber, dass die sich noch in der Pflückeinrichtung befindliche Pflanze gegen Ende des Pflückvorganges von der Einzugseinrichtung freigegeben wird, so dass letztere andere Pflanzen aufnehmen kann, was durch eine entsprechende Geometrie der Pflückeinrichtung und/oder durch ein Abschneiden der Pflanze erzielt werden kann.

Die Einzugseinrichtung überdeckt den Pflückkanal der Pflückeinrichtung, um einen Transport der Pflanze durch die Pflückeinrichtung zu ermöglichen. Dabei kann ein rotierendes Einzugselement der Einzugseinrichtung mit einer Anzahl von Fingern ausgestattet sein, zwischen denen Zwischenräume zum Erfassen und Aufnehmen von Teilen, insbesondere Stängeln, der Pflanze verbleiben. Diese Zwischenräume sind derart tief, dass der gesamte Pflückkanal oder zumindest ein wesentlicher Teil davon bei einer Rotation des Einzugselements der Einzugseinrichtung von jeweils einem Teil der Zwischenräume überstrichen wird. Die Tiefe der Zwischenräume ermöglicht der Pflanze also, die Länge des - in der Regel geraden - Pflückkanals zu durchlaufen, obwohl sie von dem rotierenden Einzugselement transportiert wird, ohne wesentlich gebogen zu werden. Dabei wird die Pflanze in radialer Richtung an der Oberfläche des Fingers entlanggleiten.

Auf diese Weise erreicht man, dass die Einzugseinrichtung die Pflanze sowohl erfasst, als auch der Pflückeinrichtung zuführt und über deren wirksame Länge transportiert. Die im Stand der Technik notwendigen Transportelemente der Pflückeinrichtung können entfallen, da ihre Funktion von der Einzugseinrichtung wahrgenommen wird. Die Pflückeinrichtung ist in unmittelbarer Nähe der Einzugseinrichtung angeordnet, was einen kompakten Aufbau der gesamten Einzugs- und Pflückeinrichtung ermöglicht.

Die Einzugseinrichtung kann mit zwei übereinander angeordneten Einzugselementen ausgestattet sein, von denen das obere Einzugselement ein abweisendes Förderverhalten aufweist. Unter einem abweisenden Förderverhalten ist hier zu verstehen, dass ein Teil der Pflanze, das in den Wirkungsbereich des Einzugselements gerät, nach außen abgestoßen, und nicht nach innen eingezogen wird. Dieses abweisende Förderverhalten kann durch eine entsprechende Krümmung von Fingern des oberen Einzugselements erreicht werden, die entgegen der Drehrichtung verläuft. Der Vorteil des abweisenden Förderverhaltens liegt darin, dass in Zusammenwirken mit einem aggressiven Förderverhalten eines Fingers des unteren Einzugselements und einem ebenfalls aggressiven Förderverhaltens der nachlaufenden Rückseite des Fingers des oberen Einzugselements eine Art Zwickel gebildet wird, in dem der Stängel der Pflanze - in geneigter Stellung - unproblematisch transportierbar ist.

Wie bereits angemerkt, erweist sich eine Einzugseinrichtung, die mit wenigstens zwei übereinander angeordneten, rotierenden Einzugselementen ausgestattet ist, als vorteilhaft. Das obere Einzugselement hat vorzugsweise ein abweisendes Förderverhalten, stößt also eindringende Pflanzenteile nach außen ab, während das untere Einzugselement bevorzugt ein aggressives Förderverhalten aufweist, somit eindringende Pflanzenteile einzieht. Diese Förderverhalten können durch eine entgegen der Drehrichtung nachlaufende Krümmung des oberen Einzugselements und eine in Drehrichtung vorlaufende Krümmung des unteren Einzugselements erzielt werden. Man erreicht dadurch, dass ein Stängel einer Pflanze vom oberen Einzugselement abgewiesen wird, während er vom unteren Einzugselement nach innen eingezogen wird. Dadurch wird er gegen die nachlaufende Oberfläche eines Fingers des oberen Einzugselements gedrückt, die ebenfalls aggressiv fördernd wirkt, so dass der Stängel zwischen je einem Finger des oberen Einzugselements und des unteren Einzugselements eingeklemmt wird. Die Finger bilden eine Art "Zwickel" zum Transport des Stängels.

Die Einzugseinrichtung ist in vorteilhafter Weise mit wenigstens einem Einzugselement ausgestattet, das mit nach außen weisenden Fingern versehen ist. Letztere dienen zum Erfassen und Transportieren von Teilen, insbesondere Stängeln, der Pflanze.

Die Positionierung der Pflückeinrichtung relativ zur Einzugseinrichtung muss derart erfolgen, dass letztere die Pflanze während ihrer Bearbeitung in der Pflückeinrichtung unproblematisch festhalten und transportieren kann. Es wäre zwar denkbar, die Pflückeinrichtung bezüglich der Vorwärtsbewegungsrichtung hinter der Einzugseinrichtung anzubringen, was aber bei einem geraden Pflückkanal der Pflückeinrichtung entweder eine hinreichende Länge des Pflückkanals verbietet, oder die Übergabe der Pflanzen von der Einzugseinrichtung zur Pflückeinrichtung wegen der dann notwendig werdenden Richtungsänderung problematisch macht. Vorzugsweise ist daher die Pflückeinrichtung seitlich neben der Einzugseinrichtung angeordnet. Die Einzugseinrichtung erfasst die vor ihr stehenden Pflanzen und verbringt sie - durch ihre Rotation - seitlich neben sich. Dort können sie, ohne dass eine Richtungsänderung nötig wird, von der Pflückeinrichtung übernommen werden, die sich (zumindest im wesentlichen) parallel zur Vorwärtsbewegungsrichtung erstreckt. Vorzugsweise liegt der Eintritt der Pflückeinrichtung vor der Drehachse der Einzugseinrichtung, so dass für die Länge der Pflückeinrichtung - bezüglich der Vorwärtsbewegungsrichtung - vor und hinter der Drehachse der Einzugseinrichtung hinreichend Platz zur Verfügung steht.

Die Einzugselemente der Einzugseinrichtung können derart gestaltet werden, dass der Durchmesser des oberen Einzugselements größer als der Durchmesser des unteren Einzugselements ist. Denkbar ist aber auch, beide Durchmesser gleich zu wählen, oder den Durchmesser des unteren Einzugselements größer als den des oberen Einzugselements zu gestalten. Bei gleichen Durchmessern werden die Pflanzen auch in etwa gleichzeitig erfasst, so dass sie näherungsweise aufrechtstehend transportiert werden. Ist der Durchmesser des unteren Einzugselements größer, so erfasst es die Pflanze zuerst, so dass sie gegen einen vorlaufenden Finger des oberen Einzugselements gedrückt wird, und in die Drehrichtung geneigt transportiert wird. Ist das obere Einzugselement größeren Durchmessers, wird die Pflanze - abhängig von seinem Förderverhalten - in oder entgegen der Drehrichtung geneigt transportiert.

Es ist insbesondere aus konstruktiven Gründen bevorzugt, das untere Einzugselement mit dem oberen Einzugselement koaxial anzuordnen. Denkbar ist aber auch, es relativ zum oberen Einzugselement in Vorwärtsbewegungsrichtung nach vorn zu versetzen, um sicherzustellen, dass es die Pflanzen vor dem oberen Einzugselement erfasst.

Auch bezüglich der Anzahl der Finger des unteren und oberen Einzugselements sind verschiedene Alternativen denkbar. So können gleich viele Finger vorgesehen sein, oder das untere Einzugselement kann mehr oder weniger Finger als das obere Einzugselement aufweisen.

Die Drehzahl des unteren Einzugselements wird in der Regel der des oberen Einzugselements entsprechen. Denkbar ist aber auch, sie größer oder kleiner als die des oberen Einzugselements zu wählen.

Als Material der Einzugselemente kommt neben Metall, insbesondere Stahl, auch Kunststoff infrage.

Die Einzugselemente können elastisch gestaltet sein, um eventuellen Belastungsspitzen ausweichen zu können. Im konkreten kann das gesamte Einzugselement oder nur die Finger aus in sich elastischem Material bestehen. Auch eine elastische Lagerung der Finger ist denkbar.

Die Pflückeinrichtung kann in an sich bekannter Weise aus einem Pflückkanal aufgebaut sein, der in ein Abstreifblech eingebracht ist, und unter dem wenigstens eine Pflückwalze parallel zum Pflückkanal angeordnet ist. In der Regel finden aber zwei Pflückwalzen Verwendung, zwischen denen ein Spalt verbleibt, der parallel zum Pflückkanal verläuft und in den die Pflanze eingezogen wird.

Der Pflückkanal verläuft entweder parallel zur Vorwärtsbewegungsrichtung oder im Winkel dazu. Die letztgenannte Alternative hat den Vorteil, dass die Baulänge der Einzugs- und Pflückeinrichtung bei gegebener Länge des Pflückkanals reduziert ist.

Eine Pflückwalze, deren vorderer Bereich zum Erfassen einer Pflanze und zu ihrem Einziehen in den zwischen zwei Pflückwalzen gebildeten Spalt geeignet ist, erweist sich als besonders vorteilhaft. Der vordere Bereich ist vorzugsweise mit einem Schneckenförderer ausgestattet.

Weiterhin können anstelle herkömmlicher, zylindrischer Pflückwalzen auch konische Pflückwalzen Verwendung finden. Zwei konische Pflückwalzen können im Winkel zueinander angeordnet sein, so dass zwischen ihnen ein Spalt konstanter Breite verbleibt.

Die erfindungsgemäße Einzugs- und Pflückeinrichtung ist zur Verwendung in Erntegutbergungsvorrichtungen vorgesehen. Eine derartige Erntegutbergungsvorrichtung, die auch als Maispflücker bezeichnet wird, dient zur Ernte von Gutarten, wie Mais und Sonnenblumen, deren Nutzteile von Pflanzenresten getrennt werden.

Insbesondere bei relativ breiten Erntegutbergungsvorrichtungen bietet sich an, beidseits einer Symmetrielinie, die in der Regel mit der Mittellinie der Erntegutbergungsvorrichtung zusammenfällt, zueinander symmetrische Einzugs- und Pflückeinrichtungen vorzusehen. Die Symmetrie ermöglicht eine gleichmäßige Gewichtsverteilung, die unerwünschte Drehmomente auf die Maschine, an der die Erntegutbergungsvorrichtung befestigt ist, vermeidet.

Obwohl die Einzugs- und Pflückeinrichtung reihenunabhängig arbeitet, kann es sinnvoll sein, sie in an sich bekannter Weise an der Erntegutbergungsvorrichtung seitlich verschiebbar (verstellbar) anzubringen. Gegebenenfalls können die Abstreifbleche benachbarter Einzugs- und Pflückeinrichtungen sich überdecken, so dass beim Verschieben keine unerwünschten Lücken zwischen ihnen entstehen. Alternativ oder zusätzlich können zusätzliche Abdeckbleche zwischen benachbarten Einzugs- und Pflückeinrichtungen eventuell verbleibende Lücken schließen.

Schließlich sind unterschiedlich hoch angebrachte benachbarte Einzugs- und Pflückeinrichtungen denkbar, um den Minimalabstand zwischen ihnen zu reduzieren.

In den Zeichnungen sind nachfolgend näher beschriebene Ausführungsbeispiele der Erfindung dargestellt. Es zeigt:
- Fig. 1: eine Draufsicht auf eine Einzugs- und Pflückeinrichtung einer Erntegutbergungsvorrichtung;
- Fig. 2: eine Seitenansicht der Einzugs- und Pflückeinrichtung aus Figur 1;
- Fig. 3: eine Frontansicht der Einzugs- und Pflückeinrichtung aus Figur 1;
- Fig. 4: eine Draufsicht auf eine Erntegutbergungsvorrichtung mit mehreren Einzugs- und Pflückeinrichtungen;
- Fig. 5: eine Draufsicht auf eine andere Ausführungsform einer Erntegutbergungsvorrichtung;
- Fig. 6: eine andere Ausführungsform einer Einzugs- und Pflückeinrichtung in perspektivischer Ansicht;
- Fig. 7: eine weitere Erntegutbergungsvorrichtung mit mehreren Einzugs- und Pflückeinrichtungen, die den in Figur 6 dargestellten ähnlich sind;
- Fig. 8: eine Draufsicht auf eine andere Ausführungsform einer Erntegutbergungsvorrichtung;
- Fig. 9: eine Draufsicht auf eine weitere Ausführungsform einer Erntegutbergungsvorrichtung;
- Fig. 10: ist eine Draufsicht auf eine andere Ausführungsform einer Einzugs- und Pflückeinrichtung;
- Fig. 11: ist eine Seitenansicht der Einzugs- und Pflückeinrichtung aus Figur 10; -
- Fig. 12: ist eine Vorderansicht der Einzugs- und Pflückvorrichtung aus Figur 10; und
- Fig. 13: ist eine perspektivische Ansicht der Einzugs- und Pflückeinrichtung der Figuren 10 bis 12.

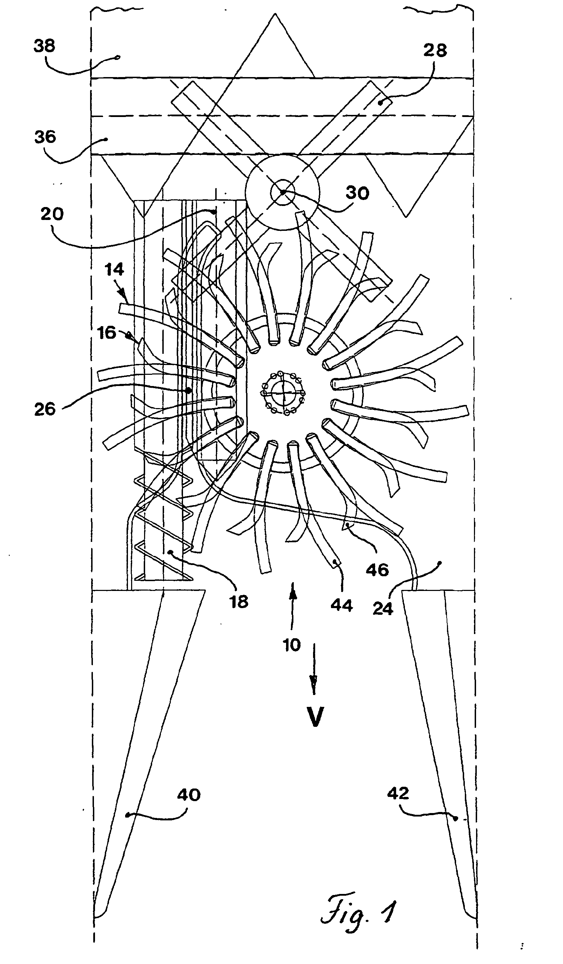

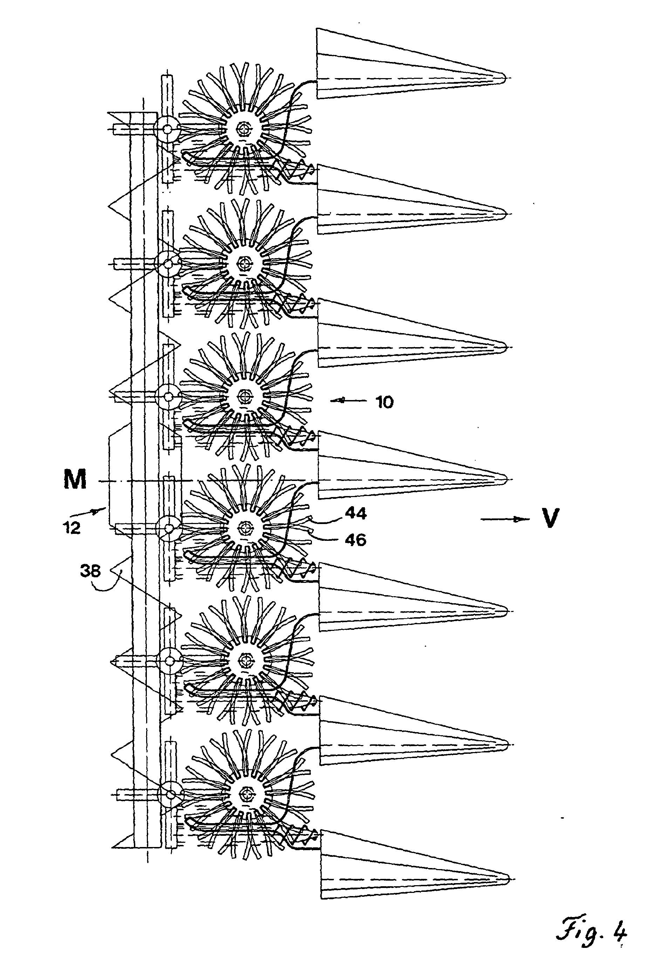

In Figur 1 ist eine Einzugs- und Pflückeinrichtung 10 einer Erntegutbergungsvorrichtung dargestellt. Eine vollständige Erntegutbergungvorrichtung 12, wie sie in Figur 4 dargestellt ist, weist in der Regel eine Mehrzahl von Einzugs- und Pflückeinrichtungen 10 auf, obwohl auch denkbar wäre, eine Erntegutbergungsvorrichtung 12 mit nur einer einzelnen Einzugs- und Pflückeinrichtung 10 zu versehen. Die Einzugs- und Pflückeinrichtung 10 besteht in ihrem grundsätzlichen Aufbau aus einem oberen Einzugselement 14 und einem unteren Einzugselement 16, die zum Erfassen und Einziehen der zu erntenden Pflanze dienen, sowie einem drehbaren Häckselmesser 28 und einer ersten Pflückwalze 18 und einer zweiten Pflückwalze 20, die unterhalb eines in einem Abstreifblech 24 eingebrachten Pflückkanals 26 angeordnet sind.

Das obere Einzugselement 14 und das untere Einzugselement 16 sind um eine vertikal verlaufende Achse drehbar angeordnet und werden durch einen - in den Zeichnungen nicht erkennbaren - Antrieb gleichsinnig in Rotation versetzt. Das obere Einzugselement 14 ist oberhalb des Abstreifblechs 24 angeordnet, während das untere Einzugselement 16 sich darunter befindet. Die Drehachsen des oberen Einzugselements 14 und des unteren Einzugselements 16 sind in den dargestellten Ausführungsformen parallel und koaxial, obwohl auch denkbar wäre, sie relativ zueinander versetzt und/oder geneigt anzuordnen. Die Drehachsen des unteren Einzugselements 16 und des oberen Einzugselements 14 verlaufen im wesentlichen vertikal, sie können aber auch leicht nach vorn geneigt sein. Die Drehrichtung des oberen Einzugselements 14 und des unteren Einzugselements 16 ist, in Figur 1 von oben betrachtet, im Uhrzeigerdrehsinn, wobei die Drehzahlen übereinstimmen. Das obere Einzugselement 14 besteht in seinem grundsätzlichen Aufbau aus einer zentralen Scheibe 48 mit über ihren Umfang verteilten, sich im wesentlichen radial erstreckenden Fingern 44, die in der Ebene der Scheibe 48 entgegen der Drehrichtung, also nachlaufend gekrümmt sind. Die Finger 44 haben daher ein abweisendes Förderverhalten. Alternativ oder zusätzlich zur Krümmung der Finger 44 wäre eine radiale Bewegung der Finger denkbar, wie sie von Schneidwerken her bekannt ist, und durch eine Exzentersteuerung erzielt werden kann, um ein abweisendes Förderverhalten zu erzielen. Das untere Einzugselement 16 ist ebenfalls aus einer zentralen Scheibe 50 mit über ihren Umfang verteilten, sich ebenfalls im wesentlichen radial erstreckenden Fingern 46 aufgebaut. Die Finger 46 des unteren Einzugselements 16 sind in der Ebene der Scheibe 50 in Drehrichtung voreilend gekrümmt. Das untere Einzugselement 16 hat somit ein aggressives Förderverhalten, es zieht also erfasste Stängel (bezüglich der radialen Richtung) nach innen ein.

Wie anhand der in Figur 1 dargestellten Draufsicht auf die Einzugs- und Pflückeinrichtung 10 erkennbar ist, sind den Einzugselementen 14, 16 in Vorwärtsbewegungsrichtung V der Erntegutbergungsvorrichtung Stängelteiler 40, 42 vorgeordnet, die Pflanzen, welche nicht genau vor den Einzugselementen 14, 16 stehen, während der Vorwärtsbewegung jeweils nach innen drücken bzw. biegen, so dass sie in den Wirkbereich der Einzugselemente 14, 16 gelangen. Auch die in Vorwärtsbewegungsrichtung vorlaufende Kante des Abstreifblechs 24 ist derart gekrümmt, dass die Stängel der Pflanzen 22 in den Wirkbereich der Einzugselemente 14, 16 gedrückt werden. Der Wirkbereich der Einzugselemente 14, 16 wird durch die Länge der Finger 44, 46 definiert und ist derart groß, dass die Einzugs- und Pflückeinrichtung 10 - im Zusammenwirken mit der gekrümmten vorlaufenden Kante des Abstreifblechs 24 und den Stängelteilern 40, 42 - reihenunabhängig arbeitet.

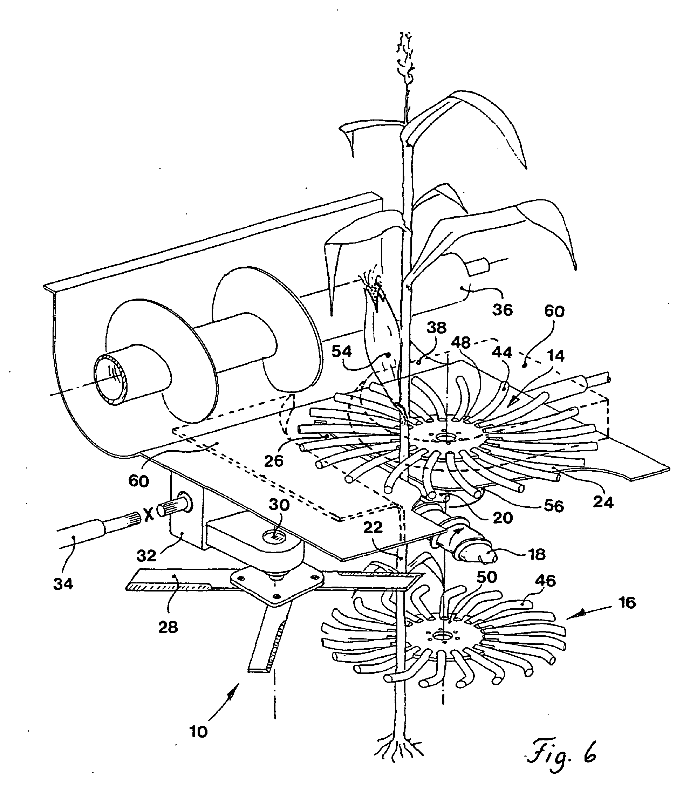

Anhand der Figur 1 ist die bereits oben beschriebene Wirkungsweise der Einzugselemente 14, 16 gut erkennbar. Ein Stängel einer auf dem Feld stehenden Pflanze 22 gerät - nachdem er (abhängig von seiner seitlichen Position) gegebenenfalls durch die Stängelteiler 40, 42 und/oder die vorlaufende Kante des Abstreifblechs 24 in Richtung auf die Mitte der Einzugs- und Pflückeinrichtung verbogen wurde - zuerst mit einem Finger 44 des oberen Einzugselements 14 in Berührung, da in der dargestellten Ausführungsform das obere Einzugselement 14 einen größeren Durchmesser als das untere Einzugselement 16 aufweist. (Es sind aber auch gleich lange Finger 44, 46 für das obere Einzugselement 14 und das untere Einzugselement 16 denkbar, wie sie in einigen der anderen dargestellten und später erläuterten Ausführungsformen verwendet werden.) Wegen der nachlaufenden, und daher abweisenden Krümmung des Fingers 44 wird der Stängel nach außen gedrückt, bis er die Spitze des Fingers 44 umrundet hat. Dann wird er von der vorlaufenden Oberfläche eines (in der Regel des nächsten, bei geringer Vortriebsgeschwindigkeit der Erntegutbergungsvorrichtung wäre aber auch denkbar, dass der Stängel noch die Spitze eines weiteren Fingers 44 des oberen Einzugselements 14 umläuft) nachfolgenden Fingers 46 des unteren Einzugselements 16 erfasst, da sich inzwischen die Einzugs- und Pflückeinrichtung 10 mit den Einzugselementen 14, 16 in Vorwärtsbewegungsrichtung V vorbewegt hat. Der Stängel gleitet dann aufgrund der Drehung des Einzugselements 16 an der vorlaufenden Oberfläche des Fingers 46 nach innen. In seinem oberen Bereich wird der Stängel durch den Finger 46 des unteren Einzugselements 16 gegen die nachlaufende Oberfläche des in Drehrichtung dem jeweiligen Finger 46 vorlaufenden Fingers 44 des oberen Einzugselements 14 gedrückt, die ebenfalls aggressiv wirkt und den Stängel nach innen zieht. Dabei wird die noch nicht vom Boden des Feldes getrennte Pflanze 22 (s. Figur 6) ggf. verbogen. Jeweils ein Finger 46 des unteren Einzugselements 16 und ein Finger 44 des oberen Einzugselements 14 wirken somit zum Transport eines Stängels zusammen und bilden eine Art Zwickel, in dem der Stängel der Pflanze 22 transportiert wird.

Das mit dem oberen Einzugselement 14 zusammenwirkende untere Einzugselement 16 verbringt den Stängel der Pflanze 22 in den Wirkungsbereich der ersten Pflückwalze 18, die seitlich neben den Einzugselementen 14, 16 angeordnet und horizontal und parallel zur Vorwärtsbewegungsrichtung V orientiert ist. In vertikaler Richtung betrachtet, ist die erste Pflückwalze 18 zwischen dem Abstreifblech 24 und dem unteren Einzugselement 16 angeordnet. Der (bezüglich der Vorwärtsbewegungsrichtung V) vordere Bereich der ersten Pflückwalze 18 ist ein Schneckenförderer, der in Zusammenwirken mit den Einzugselementen 14, 16 den Stängel der Pflanze 22 in einen Pflückkanal 26 einzieht, welcher sich zumindest näherungsweise parallel zur Vorwärtsbewegungsrichtung V erstreckt und zwischen der ersten Pflückwalze 18 und den Einzugselementen 14, 16 in das Abstreifblech 24 eingebracht ist. Der Anfang (Eintritt) des Pflückkanals liegt bezüglich der Vorwärtsbewegungsrichtung vor der Drehachse der Einzugselemente 14, 16. Der Endbereich des Pflückkanals 26 ist jedoch in Richtung auf die Drehachse der Einzugselemente 14, 16 zu gekrümmt.

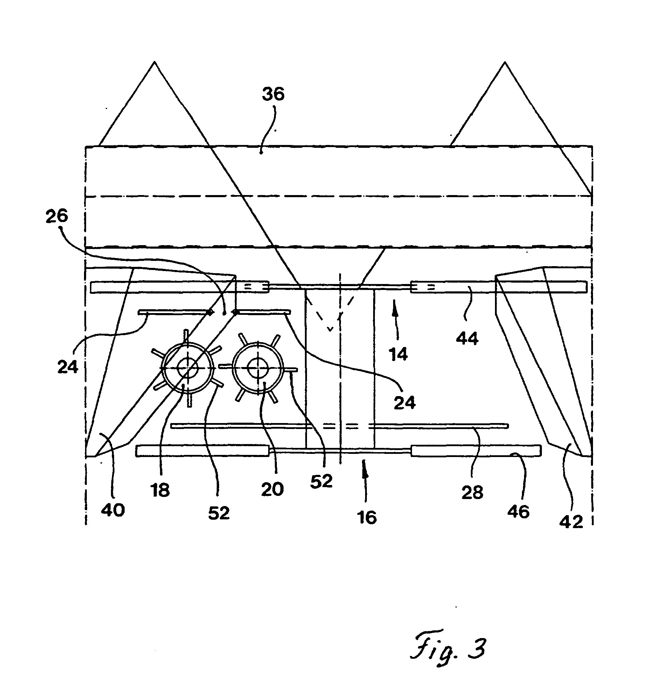

Der Stängel der Pflanze 22 gelangt anschließend in den Wirkungsbereich der zweiten Pflückwalze 20, deren vordere Spitze (bezüglich der Vorwärtsbewegungsrichtung V betrachtet) etwa in Höhe der Drehachse der Einzugselemente 14, 16 liegt. Die zweite Pflückwalze 20 ist parallel zur ersten Pflückwalze 18 orientiert und zwischen letzterer und der Drehachse der Einzugselemente 14, 16 positioniert, wobei der zwischen der ersten Pflückwalze 18 und der zweiten Pflückwalze 20 verbleibende Spalt vertikal unterhalb des Pflückkanals 26 angeordnet ist. Der hintere Bereich 18' der ersten Pflückwalze 18, dessen Länge der Länge der zweiten Pflückwalze 20 entspricht, und die zweite Pflückwalze 20 sind in an sich bekannter Weise mit axial verlaufenden, nach außen überstehenden Mitnehmern 52 versehen, wie sie am besten in Figur 3 erkennbar sind. Bezüglich der Figur 3 rotiert die erste Pflückwalze 18 im Uhrzeigersinn, die zweite Pflückwalze 20 im Gegenuhrzeigersinn. Die erste Pflückwalze 18 und die zweite Pflückwalze 20 wirken zusammen und ziehen den Stängel der Pflanze 22 nach unten ein. Dabei dient das Abstreifblech 24 beidseits des Pflückkanals 26 zum Abstreifen, so dass Nutzteile der Pflanze 22, wie Maiskolben 54 (s. Figur 6), von den Resten der Pflanze 22 getrennt werden.

Während dieses Pflückvorgangs sorgen das obere Einzugselement 14 und das untere Einzugselement 16 dafür, dass die Pflanze 22 über die Länge des Pflückkanals 26 transportiert wird. Der Stängel der Pflanze 22 ist, wie oben beschrieben, anfangs im Zwickel eingeklemmt, den ein Finger 44 des oberen Einzugselements 14 und ein Finger 46 des unteren Einzugselements 16 bilden. Während des Hauptteils des Pflückvorgangs verbleibt die Pflanze 22 in diesem Zwickel. Nachdem ein Häckselmesser 28 (s. unten), das am stromab liegenden Ende des Pflückkanals 26 auf die Pflanze 22 einwirkt, den Stängel schließlich vom Erdboden getrennt hat, und die Pflanze 22 daher nicht mehr mit einem Finger 46 des unteren Einzugselements 16 in Kontakt steht, wird die Pflanze 22 vom jeweils nachfolgenden Finger 44 des oberen Einzugselements 14 durch den Pflückkanal 26 vorangetrieben. Die Drehzahlen der Pflückwalzen 18, 20 und der Einzugselemente 14, 16 sind vorzugsweise derart bemessen, dass die gesamte Pflanze 22 in den Pflückkanal 26 nach unten eingezogen wurde, wenn das Ende des Pflückkanals 26 erreicht ist.

Die abgetrennten Nutzteile werden, durch Einwirkung der Finger 44 des rotierenden oberen Einzugselements 14, und geschoben durch nachfolgende Pflanzen 22, in eine Mulde 38 an der Rückseite der Einzugs- und Pflückeinrichtung 10 verbracht, und gelangen dort in den Wirkungsbereich eines quer zur Vorwärtsbewegungsrichtung V verlaufenden Schneckenförderers 36. Der Schneckenförderer verbringt die Nutzteile in eine an sich bekannte und daher in den Figuren nicht wiedergegebene Maschine, in der sie weiter verarbeitet werden, wie einen Mähdrescher mit einer Drescheinrichtung, oder einen Feldhäcksler mit einer Häckseleinrichtung, oder zu einer Einrichtung, die sie in einem Anhänger oder dergl. zuführt.

Die Reste der Pflanze 22, die von den Pflückwalzen 18, 20 nach unten abtransportiert werden, gelangen in den Wirkungsbereich eines rotierenden vierarmigen Häckselmessers 28 und werden durch dieses in einzelne Stücke zerteilt. Auf dem Feld werden somit gehäckselte Pflanzenreste abgelegt. Dabei wird die Pflanze 22 - zumindest beim ersten Schnitt, der sie vom Erdboden abtrennt - durch das untere Einzugselement 16 abgestützt, das eine Gegenschneide bildet. Aufgrund der hohen Anzahl der Finger 46 des unteren Einzugselements 16 dient letzteres ebenfalls als Gegenschneide. Außerdem halten auch die Pflückwalzen 18, 20 die Pflanze 22 während des Zerteilens fest.

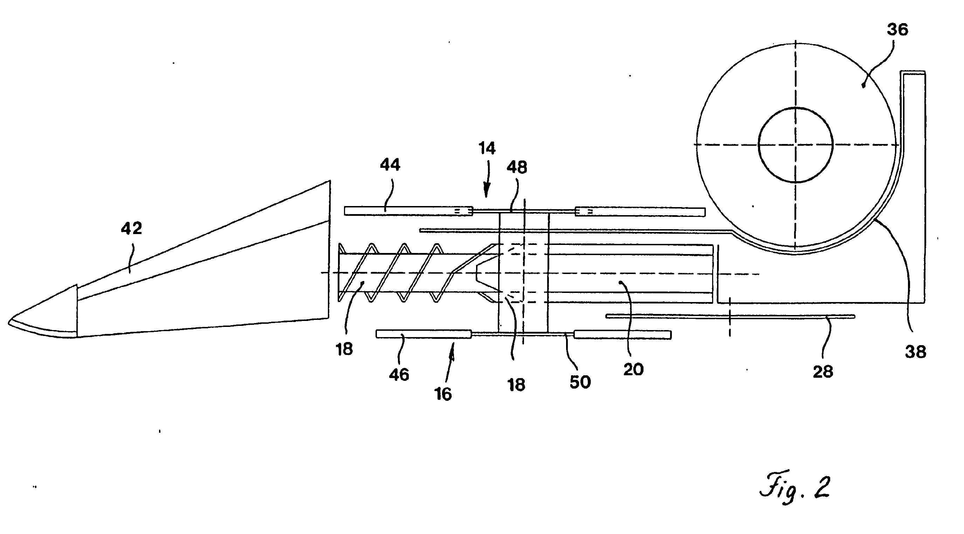

Das Häckselmesser 28 rotiert um eine vertikal verlaufende Drehachse 30, die bezüglich der Vorwärtsbewegungsrichtung V zwischen der Drehachse der Einzugselemente 14, 16 und dem Schneckenförderer 36 angeordnet ist, wie in den Figuren 1 und 2 erkennbar ist. In vertikaler Richtung ist das Häckselmesser 28 zwischen den Pflückwalzen 18, 20 und dem unteren Einzugselement 16 positioniert. Die Drehrichtung des Häckselmessers 28 ist, betrachtet man Figur 1, im Uhrzeigersinn, so dass das gehäckselte Gut seitlich nach hinten geschleudert wird.

Figur 4 zeigt eine Gesamtansicht einer Erntegutbergungsvorrichtung 12 mit insgesamt sechs Einzugs- und Pflückeinrichtungen 10, die denen der Figuren 1 bis 3 entsprechen, mit dem einzigen Unterschied, dass die Länge der Finger 44 des oberen Einzugselements 14 (zumindest etwa) mit der Länge der Finger 46 des unteren Einzugselements 16 übereinstimmt. Alle Pflückkanäle 26 sind bezüglich der Vorwärtsbewegungsrichtung V rechtsseitig der Drehachsen der Einzugselemente 14, 16 angeordnet. Der Schneckenförderer 38 fördert die Nutzteile der Pflanzen 22 in die Richtung der Mittelachse M der Erntegutbergungseinrichtung 12, von wo aus sie zur weiteren Verarbeitung abtransportiert werden. An der Rückseite der Erntegutbergungsvorrichtung 12 kann daher - in der Regel mittig - ein Schrägförderer eines Mähdreschers oder der Einzugsbereich eines Feldhäckslers angeordnet sein. Bei der hier dargestellten Ausführungsform ist als vorteilhaft anzusehen, dass alle Einzugs- und Pflückeinrichtungen 10 gleichartig sind, was niedrige Herstellungskosten ermöglicht.

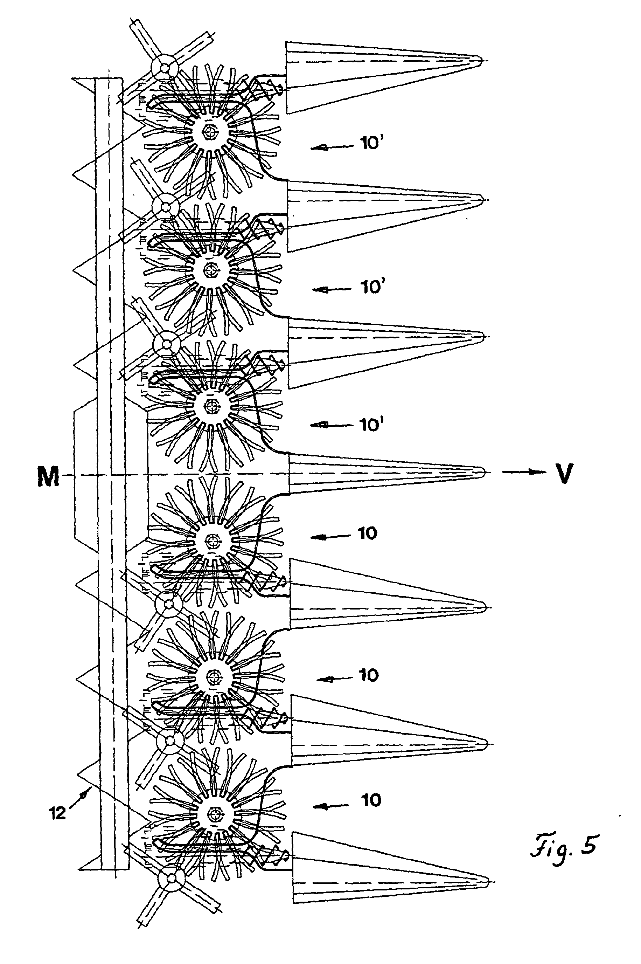

Bei der in Figur 5 wiedergegebenen Ausführungsform finden hingegen zwei unterschiedliche Arten von Einzugs- und Pflückeinrichtungen 10 Verwendung. Bezüglich der Vorwärtsbewegungsrichtung V rechtsseitig der Mittellinie M der Erntegutbergungsvorrichtung 12 sind nebeneinander drei Einzugs- und Pflückeinrichtungen 10 angeordnet, die symmetrisch zu den drei Einzugs- und Pflückeinrichtungen 10' sind, die sich linksseitig der Mittellinie M befinden. Bei den Einzugs- und Pflückeinrichtungen 10' sind der Pflückkanal 26 und die Pflückwalzen 18, 20 (bezüglich der Vorwärtsbewegungsrichtung V) linksseitig der Einzugselemente 14, 16 angeordnet, während die Einzugs- und Pflückeinrichtungen 10 gleichartig mit den in Figur 4 wiedergegebenen sind, der Pflückkanal 26 und die Pflückwalzen 18,20 also rechtsseitig der Einzugselemente 14, 16 liegen. Die Drehrichtung der Einzugselemente 14, 16 ist ebenfalls unterschiedlich: sie verläuft im Uhrzeigersinn bei den Einzugs- und Pflückeinrichtungen 10 und im Gegenuhrzeigersinn bei den Einzugs- und Pflückeinrichtungen 10'. Ein Vorteil der zweiten Ausführungsform ist, dass wegen der symmetrischen Massenverteilung der Einzugs- und Pflückeinrichtungen 10, 10' keine seitlichen Torsionsmomente auf das die Erntegutbergungsvorrichtung 12 halternde Fahrzeug wirken.

Figur 6 zeigt eine perspektivische Ansicht einer Einzugs- und Pflückeinrichtung 10, bei der die Lage des Häckselmessers 28 sich von den vorhergehenden Ausführungsformen unterscheidet. Die vertikal verlaufende Drehachse 30 des Häckselmessers 28 ist auf der den Einzugselementen 14, 16 gegenüberliegenden Seite der ersten Pflückwalze 18 angeordnet. Sie liegt bezüglich der Vorwärtsbewegungsrichtung etwa zwischen dem Schneckenförderer 36 und der Drehachse der Einzugselemente 14, 16. Das Häckselmesser 28 wird mittels eines Getriebes 32 in Drehung gebracht, welches durch eine durchgehende Antriebswelle 34 angetrieben wird. Die Antriebswelle 34 dient auch zum Antrieb der Pflückwalzen 18, 20 und der sich an einem Tragarm 56 abstützenden Einzugselemente 14, 16, wobei die dazwischengeschalteten Kraftübertragungselemente aus Gründen der Übersichtlichkeit nicht wiedergegeben wurden. Es ist denkbar, für eine Erntebergungseinrichtung 12 insgesamt nur eine - durchgehende - Antriebswelle 34 zu verwenden, obwohl es sich meist als zweckmäßig erweist, beidseits der Einzugseinrichtung einer selbstfahrenden Erntemaschine jeweils eine separat von der Erntemaschine angetriebene Antriebswelle vorzusehen. Wie in den Figuren 1 bis 3 ist in Figur 6 der Durchmesser des unteren Einzugselements 16 kleiner als der des oberen Einzugselements 14. Oberhalb des Abstreifblechs 24 ist eine Abdeckung 60 vorgesehen, die in einem oberhalb des Pflückkanals 26 liegenden Bereich einen Kanal definiert, durch den die Nutzteile der Pflanzen dem Schneckenförderer 36 zugeführt werden. Die Abdeckung 60 schützt außerdem das obere Einzugselement 14 vor unbeabsichtigter Berührung. Die Abdeckung 60 kann auch bei allen anderen Ausführungsformen der Erfindung Verwendung finden.

Die Einzugs- und Pflückeinrichtung 10 ist vorzugsweise seitlich verschiebbar an einem (ebenfalls in der Figuren nicht eingezeichneten) Träger angebracht, der sich über die Breite einer Erntegutbergungsvorrichtung 12 erstreckt. Dazu kann eine Befestigungseinrichtung, die das Getriebe 32, die Pflückwalzen 18, 20, das Abstreifblech 24 mit den Stängelteilern 40, 42 und den Tragarm 56 mit den Einzugselementen 14, 16 haltert, verschiebbar am Träger befestigt sein. Beim Verschieben eventuell entstehende Zwischenräume zwischen Abstreifblechen 24 benachbarter Einzugs- und Pflückeinrichtungen 10 können dabei durch geeignete Bleche odgl. abgedeckt sein. Eine derartige Verschiebbarkeit ist bei allen Ausführungsformen, nicht nur der in Figur 6 dargestellten, denkbar.

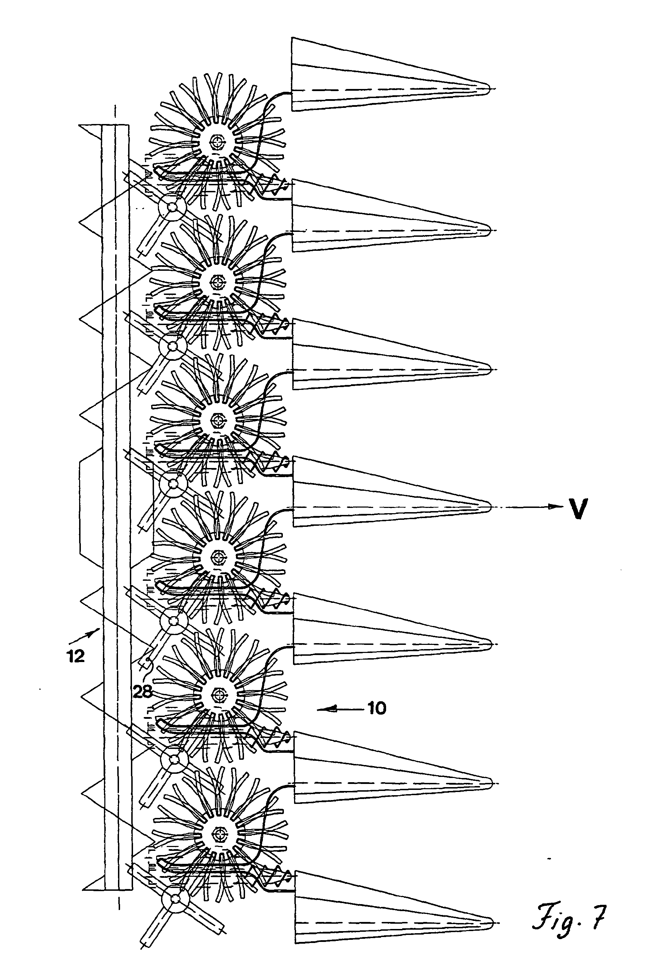

Die in Figur 7 wiedergegebene Erntegutbergungsvorrichtung 12 entspricht im wesentlichen der in Figur 4 gezeigten, jedoch finden Einzugs- und Pflückeinrichtungen 10 gemäß Figur 6 Verwendung. Die Drehachsen 30 der Häckselmesser 28 sind daher nicht hinter den Einzugselementen 14, 16 angeordnet, sondern seitlich neben der ersten Pflückwalze 18. Im Unterschied zur Figur 6 stimmen die Durchmesser der oberen Einzugselemente 14 und der unteren Einzugselemente 16 überein.

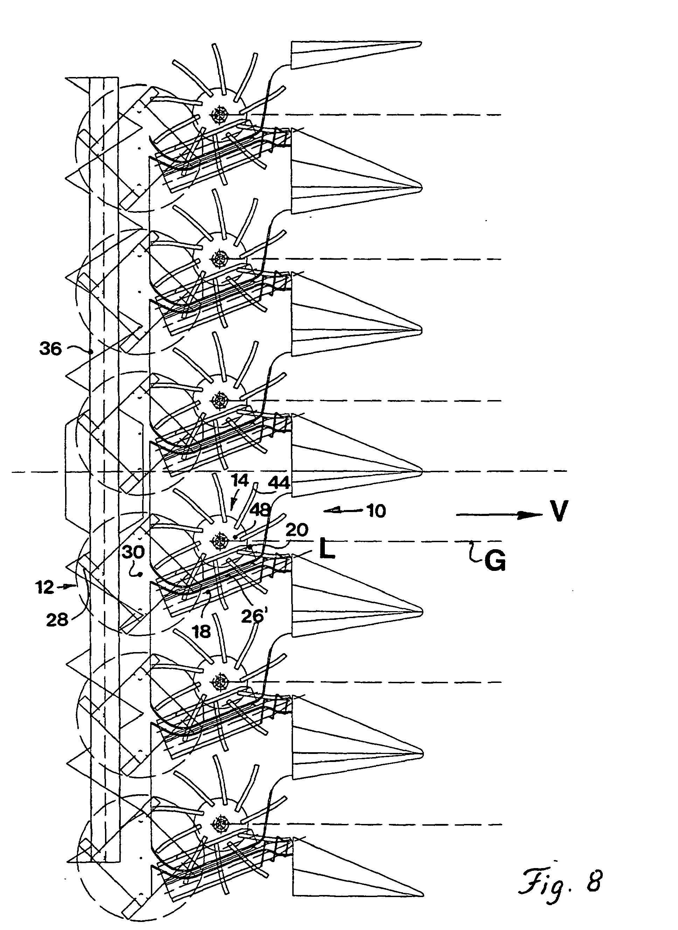

Figur 8 zeigt eine Erntegutbergungsvorrichtung mit sechs Einzugs- und Pflückeinrichtungen 10. Ein wesentlicher Unterschied zu den vorgehend beschriebenen Ausführungsformen besteht darin, dass die Pflückkanäle 26' im Winkel zur Vorwärtsbewegungsrichtung V verlaufen. Auch die erste Pflückwalze 18 und die zweite Pflückwalze 20 schließen mit der Vorwärtsbewegungsrichtung V einen Winkel ein, wobei der zwischen ihnen gebildete Spalt unterhalb des Pflückkanals 26' liegt. Die Längsachse L des Pflückkanals 26' schließt daher mit einer gedachten Geraden G, die parallel zur Vorwärtsfahrtrichtung V und durch die Drehachse des oberen Einzugselements verläuft, einen Winkel ein, wobei der Schnittpunkt der Längsachse L mit der Geraden G vor der Drehachse des oberen Einzugselements liegt. Die Pflanzen 22 werden im Pflückkanal somit sukzessive von der Geraden G fort gefördert. Der abgewinkelte Pflückkanal 26' hat zur Folge, dass die Stängel der Pflanzen 22 nicht nur in Vorwärtsfahrtrichtung, sondern auch in dazu senkrechter, seitlicher Richtung durch ihn hindurch transportiert werden. Die wirksame Länge des Pflückkanals 26' bleibt somit gleich, wobei jedoch die Baulänge der Einzugs- und Pflückeinrichtung 10 verkürzt ist, was zur vorteilhaften Folge hat, dass das Drehmoment, mit dem die Erntegutbergungsvorrichtung 12 das sie halternde Fahrzeug belastet, reduziert ist. Das hintere Ende des ansonsten gerade verlaufenden Pflückkanals 26' ist jedoch wiederum in Richtung auf die Gerade G zu gekrümmt.

Die ebenfalls vierarmigen Häckselmesser 28 haben eine Drehachse 30, die (bezüglich der Vorwärtsbewegungsrichtung V) in der Nähe der vorderen Berandung des Schneckenförderers 36 angeordnet ist. In seitlicher Richtung liegt die Drehachse 30 des Häckselmessers 28 in der Nähe des hinteren Ende des Pflückkanals 26.

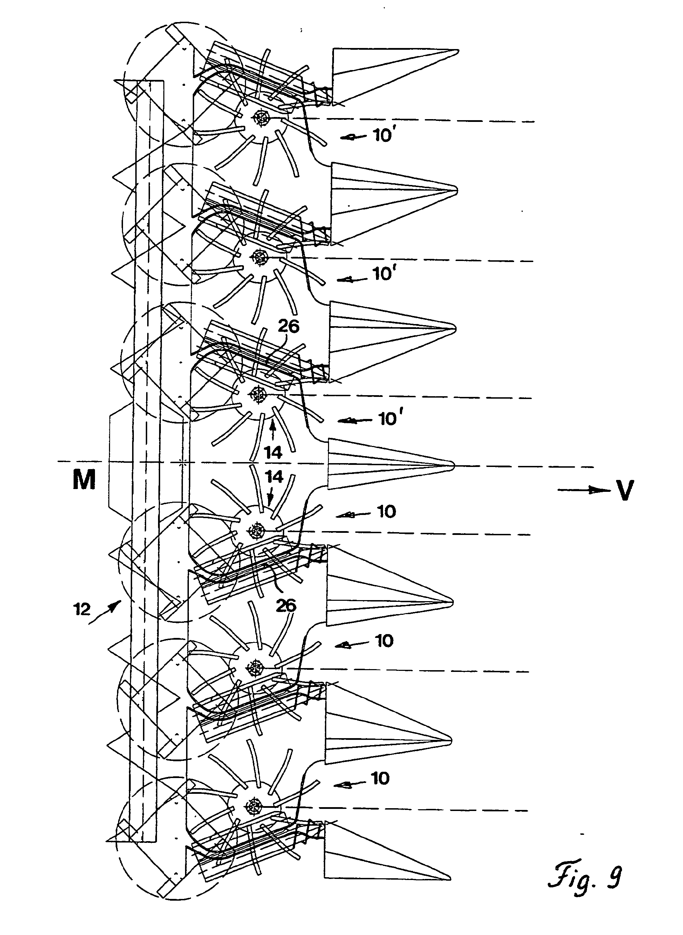

In Figur 8 finden sechs gleichartige Einzugs- und Pflückeinrichtungen 10 Verwendung. Der Vorteil besteht in den günstigen Herstellungskosten. Anzumerken ist, dass in Figur 8 und 9 die unteren Einzugselemente 16 aus Gründen der Übersichtlichkeit nicht mit eingezeichnet wurden.

Die in Figur 9 wiedergegebene Erntegutbergungsvorrichtung 12 weist zwei unterschiedliche Arten von Einzugs- und Pflückeinrichtungen 10 auf. Die drei bezüglich der Vorwärtsbewegungsrichtung V links der Mittellinie M liegenden Einzugs- und Pflückeinrichtungen 10' sind symmetrisch zu den drei rechts der Mittellinie M angeordneten Einzugs- und Pflückeinrichtungen 10. Bei den Einzugs- und Pflückeinrichtungen 10' ist der Pflückkanal 26 links von den oberen Einzugselementen 14 angeordnet, während er bei den Einzugs- und Pflückeinrichtungen 10 rechts von den oberen Einzugselementen 14 liegt. Auch alle anderen Bauelemente der Einzugs- und Pflückeinrichtungen 10 bzw. 10' sind bezüglich der Mittellinie M zueinander symmetrisch. Die Einzugs- und Pflückeinrichtungen 10 entsprechen den in Figur 8 gezeigten. Hier ist die Drehrichtung der Einzugs- und Pflückeinrichtungen 10 im Uhrzeigersinn und somit entgegengesetzt mit den Einzugs- und Pflückeinrichtungen 10', die sich im Gegenuhrzeigersinn drehen. Der Vorteil der symmetrischen Anordnung der Einzugs- und Pflückeinrichtungen liegt, wie bei der in Figur 5 dargestellten Ausführungsform, darin, dass die Massen beidseits der Mittellinie gleichmäßig verteilt sind, so dass kein unerwünschtes Drehmoment auf das die Erntegutbergungsvorrichtung 12 halternde Fahrzeug wirkt.

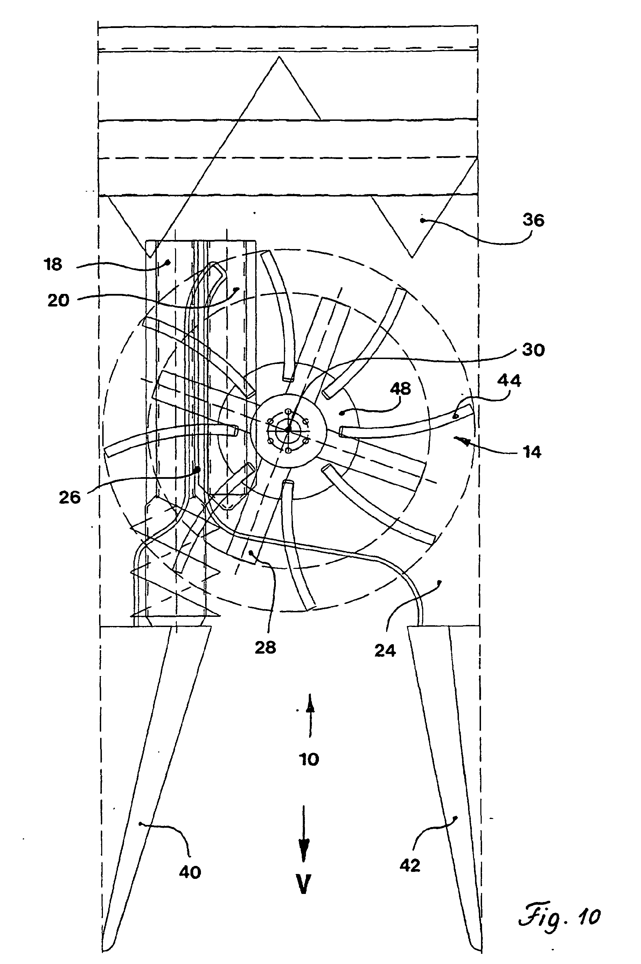

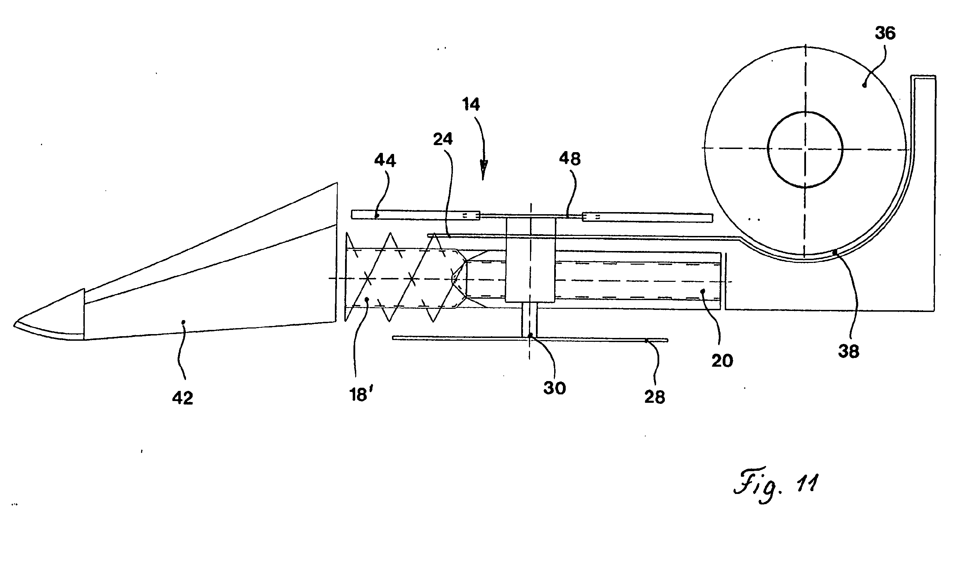

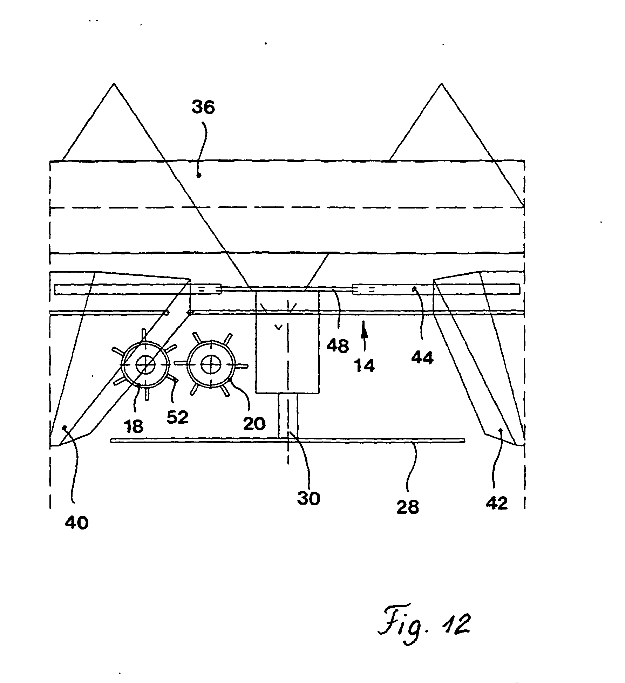

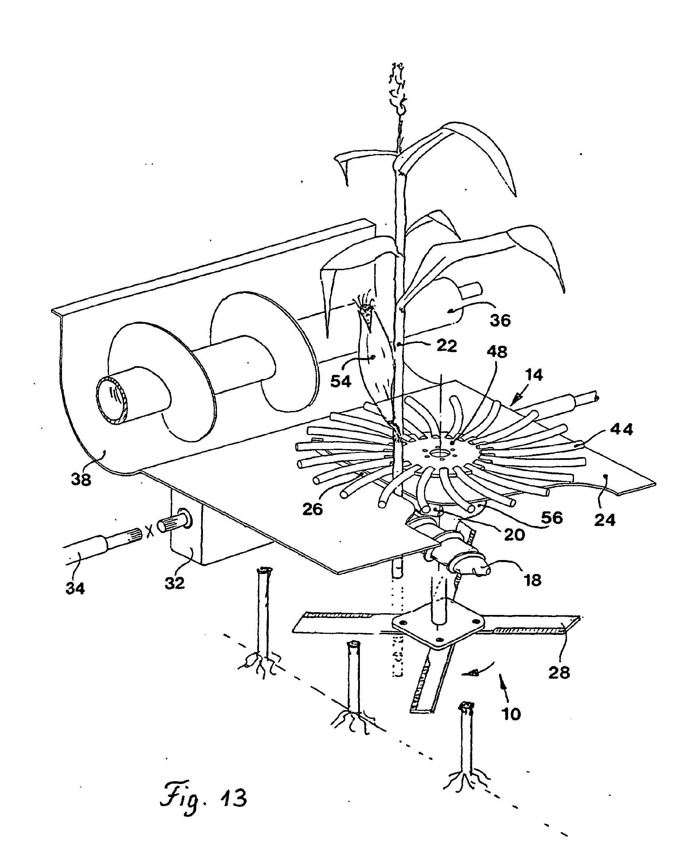

Die in den Figuren 10 bis 13 wiedergegebene Ausführungsform unterscheidet sich von den vorhergehend beschriebenen Ausführungsformen der Einzugs- und Pflückeinrichtung 10 im wesentlichen dadurch, dass anstelle des unteren Einzugselement 16 das Häckselmesser 28 getreten ist. Das Häckselmesser 28 ist daher koaxial unterhalb des oberen (nunmehr einzigen) Einzugselements 14 angeordnet. In vertikaler Richtung befindet sich das Häckselmesser, wie man aus Figur 12 erkennt, unterhalb der Pflückwalzen 18, 20.

Die Funktion der Ausführungsform gemäß den Figuren 10 bis 13 ist wie folgt. Das Häckselmesser 28 dreht sich um eine vertikale Achse 30, um die sich auch das Einzugselement 14 dreht. Die Drehzahl des Häckselmessers 28, dessen Durchmesser kleiner als der des Einzugselements 14 ist, ist wesentlich größer als die des Einzugselements 14, ihre Drehrichtungen stimmen aber überein. In Vorwärtsbewegungsrichtung V vor dem Einzugselement 14 stehende Stängel von Pflanzen werden, gegebenenfalls, nachdem sie von den Stängelteilern 40, 42 seitlich verbogen wurden, von dem in Figur 10 im Uhrzeigersinn drehenden Einzugselement 14 berührt. Wegen des abweisenden Förderverhaltens der vorlaufenden Kante der Finger 44 des Einzugselements 14 werden sie nach außen gedrückt, und nicht nach innen eingezogen. Wird die Einzugs- und Fördereinrichtung 10, die Bestandteil einer Erntegutbergungsvorrichtung ist, durch das letztere halternde Erntefahrzeug weiter in Richtung V bewegt, gerät der Stengel der Pflanze in den Wirkungsbereich des Häckselmessers 28, das sie von ihrer im Boden verbleibenden Wurzel abtrennt. Die Pflanze bleibt wegen ihrer Massenträgheit stehen, kippt aber gegen die nachlaufende Kante eines der Finger 44. Letzterer dreht sich in Richtung auf den Pflückkanal 26 zu, so dass die Pflanze zwar leicht gekippt wird, aber abgestützt durch den Finger 44 den Pflückkanal 26 erreicht, und dort vom vorderen Bereich der ersten Pflückwalze 18 erfasst wird. Die zweite Pflückwalze 20 wirkt als Ausräumer, so dass die Pflanze, wie auch bei den oben erläuterten Ausführungsformen der Erfindung, zwischen den Pflückwalzen 18, 20 hindurchgezogen wird. Ist die Pflanze im Pflückkanal, wird sie von der vorlaufenden Kante des nachfolgenden Fingers 44 des Einzugselements 14 über die Länge der Pflückkanals 26 vorangetrieben. Dabei werden Nutzteile, wie Maiskolben 54, am Abstreifblech 24 abgetrennt und durch Einwirkung des Einzugselements 14 der Mulde 38 zugeführt, von wo sie der Schneckenförderer 36 zu einem Erntefahrzeug verbringt.

Gleichzeitig wird die Pflanze in ihrem unteren Bereich durch das Häckselmesser 28 zerteilt. Bevor sie den Pflückkanal 26 erreicht hat, fällt sie durch Einwirkung der Schwerkraft sukzessive nach unten, so dass ihre unteren Teile durch das Häckselmesser abgetrennt werden. Ist die Pflanze in den Pflückkanal 26 eingeführt, wird sie durch die Pflückwalzen 18, 20 sukzessive nach unten eingezogen, und wird unterhalb der Pflückwalzen durch das Häckselmesser 28 zerteilt.

Bis auf die unterschiedliche Position und Wirkungsweise des Häckselmessers entspricht die Funktion der in den Figuren 10 bis 13 dargestellten Einzugs- und Pflückeinrichtung also den vorangegangenen Ausführungsbeispielen.

## Patentansprüche

1. Einzugs- und Pflückeinrichtung (10), mit einer Einzugseinrichtung, die zum Erfassen von Teilen, insbesondere Stängeln, von Pflanzen (22) eingerichtet und geeignet ist, Pflanzen (22) einer Pflückeinrichtung zuzuführen, die eingerichtet ist, Teile von den Pflanzen abzutrennen, wobei die Einzugseinrichtung die wirksame Länge des Pflückkanals der Pflückeinrichtung überdeckt, **dadurch gekennzeichnet, dass** die Einzugseinrichtung um eine vertikal verlaufende Achse in Drehung versetzbar ist und einen derart großen Wirkbereich aufweist, dass sie Pflanzen (22) reihenunabhängig erfassen kann.

2. Einzugs- und Pflückeinrichtung (10) nach Anspruch 1, **dadurch gekennzeichnet, dass** die Einzugseinrichtung ein rotierendes Einzugselement (14, 16) mit einer Anzahl von Fingern (44, 46) aufweist, zwischen denen Zwischenräume definiert sind, die zum Erfassen von Teilen, insbesondere Stängeln, von Pflanzen (22) eingerichtet sind, und dass die Zwischenräume derart tief sind, dass sie bei Drehung des Einzugselements (14, 16) den Pflückkanal (26) überstreichen.

3. Einzugs- und Pflückeinrichtung (10) nach Anspruch 1 oder 2, **dadurch gekennzeichnet, dass** ein unteres Einzugselement (16) vorgesehen ist, das unterhalb eines oberen Einzugselements (14) angeordnet ist.

4. Einzugs- und Pflückeinrichtung (10) nach einem der Ansprüche 1 bis 3, **dadurch gekennzeichnet, dass** ein Einzugselement, vorzugsweise ein oberes Einzugselement (16), eine entgegen der Drehrichtung des Einzugselements verlaufende Krümmung aufweist.

5. Einzugs- und Pflückeinrichtung (10) nach einem der vorhergehenden Ansprüche, **dadurch gekennzeichnet, dass** ein Einzugselement, vorzugsweise ein unteres Einzugselement (16), eine in Drehrichtung des Einzugselements verlaufende Krümmung aufweist.

6. Einzugs- und Pflückeinrichtung (10) nach einem der vorhergehenden Ansprüche, **dadurch gekennzeichnet, dass** die Pflückeinrichtung bezüglich der Vorwärtsbewegungsrichtung (V) seitlich neben der Einzugseinrichtung angeordnet ist.

7. Einzugs- und Pflückeinrichtung (10) nach einem der vorhergehenden Ansprüche, **dadurch gekennzeichnet, dass** der Eintritt der Pflückeinrichtung bezüglich der Vorwärtsbewegungsrichtung (V) vor der Drehachse der Einzugseinrichtung angeordnet ist.

8. Einzugs- und Pflückeinrichtung (10) nach einem der Ansprüche 3 bis 7, **dadurch gekennzeichnet, dass** der Durchmesser des unteren Einzugselements (14) kleiner oder gleich oder größer als der des oberen Einzugselements (16) ist.

9. Einzugs- und Pflückeinrichtung (10) nach einem der Ansprüche 3 bis 8, **dadurch gekennzeichnet, dass** das untere Einzugselement (16) mit dem oberen Einzugselement (14) koaxial oder in Vorwärtsbewegungsrichtung gegenüber dem oberen Einzugselement (14) in Vorwärtsbewegungsrichtung (V) nach vorn versetzt ist.

10. Einzugs- und Pflückeinrichtung (10) nach einem der Ansprüche 3 bis 9, **dadurch gekennzeichnet, dass** ein oberes Einzugselement (14) gleich viele, weniger oder mehr Finger (44) als ein unteres Einzugselement (16) aufweist.

11. Einzugs- und Pflückeinrichtung (10) nach einem der Ansprüche 3 bis 10, **dadurch gekennzeichnet, dass** die Drehzahl des unteren Einzugselements (16) der des oberen Einzugselements (14) entspricht oder größer oder kleiner ist.

12. Einzugs- und Pflückeinrichtung (10) nach einem der vorhergehenden Ansprüche, **dadurch gekennzeichnet, dass** wenigstens ein Einzugselement (14, 16) aus Metall und/oder Kunststoff ist.

13. Einzugs- und Pflückeinrichtung (10) nach einem der vorhergehenden Ansprüche, **gekennzeichnet durch** ein elastisches Einzugselement, das insbesondere mit federnd gelagerten und/oder federnden Fingern (16, 18) ausgestattet ist.

14. Einzugs- und Pflückeinrichtung (10) nach einem der vorhergehenden Ansprüche, **dadurch gekennzeichnet, dass** die Pflückeinrichtung einen Pflückkanal (26) aufweist, der in einem Abstreifblech (24) eingebracht ist, und wenigstens eine darunter angeordnete, zum Pflückkanal parallel verlaufende Pflückwalze (18, 20).

15. Einzugs- und Pflückeinrichtung (10) nach einem der vorhergehenden Ansprüche, **dadurch gekennzeichnet, dass** der Pflückkanal (26) parallel oder im Winkel zur Vorwärtsbewegungrichtung (V) verläuft.

16. Einzugs- und Pflückeinrichtung (10) nach einem der vorhergehenden Ansprüche, **dadurch gekennzeichnet, dass** eine Pflückwalze (18) im vorderen Bereich (18') zum Erfassen der Pflanze (22) eingerichtet ist.

17. Einzugs- und Pflückeinrichtung (10) nach einem der vorhergehenden Ansprüche, **gekennzeichnet durch** wenigstens eine konische Pflückwalze.

18. Einzugs- und Pflückeinrichtung (10) nach einem der vorhergehenden Ansprüche, **gekennzeichnet durch** zwei Pflückwalzen, deren Achsen einen Winkel einschließen.

19. Erntegutbergungseinrichtung (12) mit wenigstens einer Einzugs- und Pflückeinrichtung (10) nach einem der vorhergehenden Ansprüchen.

20. Erntegutbergungsvorrichtung (12) nach Anspruch 19, **dadurch gekennzeichnet, dass** beidseits einer Symmetrielinie, die vorzugsweise der Mittelachse der Erntegutbergungsvorrichtung (12) entspricht, zueinander symmetrische Einzugs- und Pflückeinrichtungen (10) angeordnet sind.

21. Erntegutbergungsvorrichtung (12) nach Anspruch 19 oder 20, **dadurch gekennzeichnet, dass** die Einzugs- und Pflückeinrichtungen (10) verschiebbar sind.

22. Erntegutbergungsvorrichtung (12) nach Anspruch 19, 20 oder 21, **dadurch gekennzeichnet, dass** benachbarte Einzugs- und Pflückeinrichtungen (10) in unterschiedlichen Höhen angebracht sind.

## Claims

1. Feeding and picking device (10), comprising a feeding device which is arranged to grasp parts of plants (22), especially stalks, and is suitable for feeding plants (22) to a picking device which is designed to separate parts from the plants, the feeding device covering the effective length of the snapping channel of the picking device, **characterised in that** the feeding device can be made to rotate about a vertical axis and has such a large effective area that it can grasp plants (22) independently of rows.

2. Feeding and picking device (10) according to claim 1, **characterised in that** the feeding device has a rotating feeding element (14, 16) provided with a number of fingers (44, 46) between which gaps are defined which are designed to grasp parts of plants (22), especially stalks, and **in that** the gaps are so deep that they pass over the snapping channel (26) as the feeding element (14, 16) rotates.

3. Feeding and picking device (10) according to claim 1 or 2, **characterised in that** a lower feeding element (16) is provided which is arranged below an upper feeding element (14).

4. Feeding and picking device (10) according to one of claims 1 to 3, **characterised in that** one feeding element, preferably an upper feeding element (16), has a curvature extending against the direction of rotation of the feeding element.

5. Feeding and picking device (10) according to one of the preceding claims, **characterised in that** one feeding element, preferably a lower feeding element (16), has a curvature extending in the direction of rotation of the feeding element.

6. Feeding and picking device (10) according to one of the preceding claims, **characterised in that** the picking device is arranged laterally beside the feeding device with respect to the direction of travel (V).

7. Feeding and picking device (10) according to one of the preceding claims, **characterised in that** the entrance to the picking device is arranged in front of the axis of rotation of the feeding device with respect to the direction of travel (V).

8. Feeding and picking device (10) according to one of claims 3 to 7, **characterised in that** the diameter of the lower feeding element (14) is smaller than or the same size as or larger than that of the upper feeding element (16).

9. Feeding and picking device (10) according to one of claims 3 to 8, **characterised in that** the lower feeding element (16) is coaxial with the upper feeding element (14) or is offset to the front in the direction of travel (V) in relation to the upper feeding element (14).

10. Feeding and picking device (10) according to one of claims 3 to 9, **characterised in that** an upper feeding element (14) has the same number of fingers or fewer or more fingers (44) than a lower feeding element (16).

11. Feeding and picking device (10) according to one of claims 3 to 10, **characterised in that** the rotational speed of the lower feeding element (16) corresponds to that of the upper feeding element (14) or is lower or greater than it.

12. Feeding and picking device (12) according to one of the preceding claims, **characterised in that** at least one feeding element (14, 16) is formed from metal and/or plastics material.

13. Feeding and picking device (10) according to one of the preceding claims, **characterised by** an elastic feeding element which is equipped especially with spring-mounted and/or resilient fingers (16, 18).

14. Feeding and picking device (10) according to one of the preceding claims, **characterised in that** the picking device has a snapping channel (26) which is introduced into a snapping bar (24), and at least one snapping roll (18, 20) arranged below same and extending parallel to the snapping channel.

15. Feeding and picking device (10) according to one of the preceding claims, **characterised in that** the snapping channel (26) extends parallel or at an angle to the direction of travel (V).

16. Feeding and picking device (10) according to one of the preceding claims, **characterised in that** a snapping roll (18) is arranged in the front region (18') for grasping the plant (22).

17. Feeding and picking device (10) according to one of the preceding claims, **characterised by** at least one conical snapping roll.

18. Feeding and picking device (10) according to one of the preceding claims, **characterised by** two snapping rolls, the axes of which enclose an angle.

19. Crop harvesting machine (12) having at least one feeding and picking device (10) according to one of the preceding claims.

20. Crop harvesting machine (12) according to claim 19, **characterised in that** feeding and picking devices (10) which are symmetrical to each other are arranged on both sides of a line of symmetry which preferably corresponds to the centre axis of the crop harvesting machine (12).

21. Crop harvesting machine (12) according to claim 19 or 20, **characterised in that** the feeding and picking devices (10) are displaceable.

22. Crop harvesting machine (12) according to claim 19, 20 or 21, **characterised in that** adjacent feeding and picking devices (10) are attached at different heights.

## Revendications

1. Dispositif d'introduction et de cueillage (10) comportant un dispositif d'introduction qui est conçu pour saisir des parties des végétaux (22), en particulier des tiges, et qui est apte à acheminer les végétaux (22) vers un dispositif de cueillage qui est conçu pour séparer des parties des végétaux, le dispositif d'introduction couvrant la longueur active du conduit de cueillage du dispositif de cueillage, **caractérisé en ce que** le dispositif d'introduction peut être entraîné en rotation autour d'un axe vertical et comporte une zone d'action si grande que les végétaux (22) peuvent être saisis indépendamment des rangs.

2. Dispositif d'introduction et de cueillage (10) selon la revendication 1, **caractérisé en ce que** le dispositif d'introduction comporte un élément d'introduction (14, 16) rotatif avec une pluralité de doigts (44, 46) qui définissent entre eux des intervalles qui sont conçus pour saisir des parties de végétaux (22), en particulier des tiges, et **en ce que** les intervalles ont une profondeur telle qu'ils balaient le canal de cueillage (26) pendant la rotation de l'élément d'introduction (14, 16).

3. Dispositif d'introduction et de cueillage (10) selon la revendication 1 ou 2, **caractérisé en ce qu'**il est prévu un élément d'introduction inférieur (16), qui est agencé en dessous d'un élément d'introduction supérieur (14).

4. Dispositif d'introduction et de cueillage (10) selon l'une quelconque des revendications 1 à 3, **caractérisé en ce qu'**un élément d'introduction, de préférence un élément d'introduction supérieur (14), comporte une courbure orientée dans le sens opposé au sens de rotation de l'élément d'introduction.

5. Dispositif d'introduction et de cueillage (10) selon l'une quelconque des revendications précédentes, **caractérisé en ce qu'**un élément d'introduction, de préférence un élément d'introduction inférieur (16), comporte une courbure orientée dans le sens de rotation de l'élément d'introduction.

6. Dispositif d'introduction et de cueillage (10) selon l'une quelconque des revendications précédentes, **caractérisé en ce que** le dispositif de cueillage est agencé latéralement à côté du dispositif d'introduction par référence au sens de déplacement vers l'avant (V).

7. Dispositif d'introduction et de cueillage (10) selon l'une quelconque des revendications précédentes, **caractérisé en ce que** l'entrée du dispositif de cueillage est située, par référence au sens de déplacement vers l'avant (V), en amont de l'axe de rotation du dispositif d'introduction.

8. Dispositif d'introduction et de cueillage (10) selon l'une quelconque des revendications 3 à 7, **caractérisé en ce que** le diamètre de l'élément d'introduction inférieur (16) est inférieur ou égal ou supérieur au diamètre de l'élément d'introduction supérieur (14).

9. Dispositif d'introduction et de cueillage (10) selon l'une quelconque des revendications 3 à 8, **caractérisé en ce que** l'élément d'introduction inférieur (16) est agencé coaxialement à l'élément d'introduction supérieur (14) ou est décalé dans le sens de déplacement vers l'avant (V) par rapport à l'élément d'introduction supérieur (14) vers l'avant dans le sens de déplacement vers l'avant (V).

10. Dispositif d'introduction et de cueillage (10) selon l'une quelconque des revendications 3 à 9, **caractérisé en ce qu'**un élément d'introduction supérieur (14) comporte un nombre de doigts (44) égal, inférieur ou supérieur à celui de l'élément d'introduction inférieur (16).

11. Dispositif d'introduction et de cueillage (10) selon l'une quelconque des revendications 3 à 10, **caractérisé en ce que** la vitesse de rotation de l'élément d'introduction inférieur (16) correspond à celle de l'élément d'introduction supérieur (14) ou est supérieure ou inférieure à celle-ci.

12. Dispositif d'introduction et de cueillage (10) selon l'une quelconque des revendications précédentes, **caractérisé en ce qu'**au moins un élément d'introduction (14, 16) est réalisé en métal et/ou en matière plastique.

13. Dispositif d'introduction et de cueillage (10) selon l'une quelconque des revendications précédentes, **caractérisé par** un élément d'introduction élastique, qui est muni de doigts (16, 18) montés sur ressort et/ou à ressort.

14. Dispositif d'introduction et de cueillage (10) selon l'une quelconque des revendications précédentes, **caractérisé en ce que** le dispositif de cueillage comporte un conduit de cueillage (26), qui est réalisé dans une plaque de débourrage (24), et au moins un rouleau de cueillage (18, 20) agencé parallèlement au conduit de cueillage et en dessous de ladite plaque de débourrage.

15. Dispositif d'introduction et de cueillage (10) selon l'une quelconque des revendications précédentes, **caractérisé en ce que** le conduit de cueillage (26) est disposé parallèlement ou en angle par rapport au sens de déplacement vers l'avant (V).

16. Dispositif d'introduction et de cueillage (10) selon l'une quelconque des revendications précédentes, **caractérisé en ce qu'**un rouleau de cueillage (18) est conçu dans la zone avant (18') pour saisir des végétaux (22).

17. Dispositif d'introduction et de cueillage (10) selon l'une quelconque des revendications précédentes, **caractérisé par** au moins un rouleau de cueillage conique.

18. Dispositif d'introduction et de cueillage (10) selon l'une quelconque des revendications précédentes, **caractérisé par** deux rouleaux de cueillage dont les axes forment un angle.

19. Dispositif de récolte (12) comportant au moins un dispositif d'introduction et de cueillage (10) selon l'une quelconque des revendications précédentes.

20. Dispositif de récolte (12) selon la revendication 19, **caractérisé en ce que** des dispositifs d'introduction et de cueillage (10) sont agencés symétriquement l'un à l'autre de part et d'autre d'une ligne de symétrie, qui correspond de préférence à l'axe médian du dispositif de récolte (12).

21. Dispositif de récolte (12) selon la revendication 19 ou 20, **caractérisé en ce que** les dispositifs d'introduction et de cueillage (10) peuvent se déplacer.

22. Dispositif de récolte (12) selon la revendication 19, 20 ou 21, **caractérisé en ce que** des dispositifs d'introduction et de cueillage (10) adjacents sont agencés à des hauteurs différentes.
